# EUROPEAN PATENT APPLICATION

(11) **EP 4 588 658 A1**
(43) Date of publication of application: **23.07.2025**
(21) Application number: 23865594.8
(22) Date of filing: 14.09.2023
(51) Int. Cl.: B32B 27/00, B32B 3/30, B32B 7/12, B32B 27/18

(54) **DECORATIVE SHEET AND DECORATIVE MEMBER**

(30) Priority: 14.09.2022 JP 2022146131
(71) Applicant: Dai Nippon Printing Co., Ltd., Tokyo 162-8001 (JP)
(72) Inventor: SUGITA, Natsuo, Tokyo-to 162-8001 (JP); FURUTA, Satoshi, Tokyo-to 162-8001 (JP); USUI, Yumiko, Tokyo-to 162-8001 (JP)
(74) Representative: Müller-Boré & Partner Patentanwälte PartG mbB
(86) International application number: PCT/JP2023/033515
(87) International publication number: WO 2024/058245

(57) **Abstract**

The present disclosure provides a decorative sheet comprising: a substrate layer; a design layer disposed on one surface of the substrate layer; a resin layer disposed on a surface of the design layer that is opposite side to the substrate layer; and a surface protective layer disposed on a surface of the resin layer that is opposite side to the design layer, wherein the resin layer has a convexoconcave shape including a convex portion and a concave portion, on a surface protective layer side surface; the decorative sheet includes a designability improving layer, on the surface protective layer side surface of the resin layer, including at least one of a colorant and a matting agent; the designability improving layer includes a filled portion disposed in the concave portion; as the filled portion, the decorative sheet includes a filled portion where at least a part thereof is not covered by the surface protective layer; and the surface protective layer and the designability improving layer respectively include an ultraviolet ray absorber.

## Description

### Technical Field

The present disclosure relates to a decorative sheet and a decorative member.

### Background Art

As an interior member or an exterior member used for construction materials, for example, a decorative member including a base member and a decorative sheet is known. In order to obtain a three-dimensional design or to obtain a desired material texture, a decorative sheet wherein convexoconcave is imparted, by an embossing process, on the surface of a transparent resin layer has been proposed. Further, the technology of filling the concave portion of the convexoconcave with colored ink has been proposed.

For example, in Patent Document 1, an ink including a colorant is supplied onto the surface of a transparent resin layer including a convexoconcave, and by raking (wiping) thereon with a doctor blade, the ink is filled in the concave portion and excess ink is removed. For example, by combining the colored resin layer (filled portion) wherein the concave portion of the transparent resin layer is filled with the ink, and the pattern of the design layer of the decorative sheet, a good three-dimensional appearance and a good genuineness can be obtained, and a high design quality can be obtained.

Also, in Patent Document 1, in order to impart surface protection properties such as weather resistance and fouling resistance to the decorative sheet, a provision of a surface protective layer is proposed. In order to fully exhibit the surface protection properties, the surface protective layer is usually disposed over the entire surface of the decorative sheet, in a plan view along the thickness direction of the decorative sheet.

### Citation List

### Patent Document

Patent Document 1: Japanese Patent Application Laid-Open (JP-A) No. 2008-105372

### Summary of Disclosure

### Technical Problem

As described above, the surface protective layer is usually disposed on the entire surface of the decorative sheet. Meanwhile, the surface of the filled portion may not be covered by the surface protective layer unintentionally, in some cases. In such cases, the filled portion not covered by the surface protective layer is inferior in weather-resistance than the filled portion covered by the surface protective layer.

The present disclosure has been made in view of the above circumstances, and an object of the present disclosure is to provide a decorative sheet with good weather resistance.

### Solution to Problem

The present disclosure provides a decorative sheet comprising: a substrate layer; a design layer disposed on one surface of the substrate layer; a resin layer disposed on a surface of the design layer that is opposite side to the substrate layer; and a surface protective layer disposed on a surface of the resin layer that is opposite side to the design layer, wherein the resin layer has a convexoconcave shape including a convex portion and a concave portion, on a surface protective layer side surface; the decorative sheet includes a designability improving layer, on the surface protective layer side surface of the resin layer, including at least one of a colorant and a matting agent; the designability improving layer includes a filled portion disposed in the concave portion; as the filled portion, the decorative sheet includes a filled portion where at least a part thereof is not covered by the surface protective layer; and the surface protective layer and the designability improving layer respectively include an ultraviolet ray absorber.

The present disclosure provides a decorative member comprising a base member, and the decorative sheet described above.

### Advantageous Effects of Disclosure

According to the present disclosure, a decorative sheet with good weather resistance is provided.

### Brief Description of Drawings

[FIG. 1] is a schematic cross-sectional view exemplifying a decorative sheet in the present disclosure.
[FIG. 2] is a schematic cross-sectional view exemplifying a decorative sheet in the present disclosure.
[FIGS. 3] are schematic cross-sectional views exemplifying the convexoconcave shape of the resin layer in the present disclosure.
[FIGS. 4] are schematic cross-sectional views exemplifying a decorative sheet in the present disclosure.
[FIGS. 5] are schematic cross-sectional views exemplifying a decorative sheet in the present disclosure.
[FIGS. 6] are schematic cross-sectional views exemplifying the convexoconcave shape of the resin layer in the present disclosure.
[FIGS. 7] are schematic cross-sectional views exemplifying the convexoconcave shape of the resin layer in the present disclosure.
[FIGS. 8] are schematic cross-sectional views exemplifying a method for producing a decorative sheet in the present disclosure.
[FIG. 9] is a schematic cross-sectional view exemplifying a decorative member in the present disclosure.

### Description of Embodiments

Embodiments in the present disclosure are hereinafter explained with reference to drawings. However, the present disclosure is enforceable in a variety of different forms, and thus should not be taken as is limited to the contents described in the embodiments exemplified as below. Also, the drawings may show the features of the present disclosure such as width, thickness, and shape of each part schematically comparing to the actual form in order to explain the present disclosure more clearly in some cases; however, it is merely an example, and thus does not limit the interpretation of the present disclosure. Also, in the present descriptions and each drawing, for the factor same as that described in the figure already explained, the same reference sign is indicated and the detailed explanation thereof may be omitted.

In the present descriptions, in expressing an aspect wherein some member is placed on the other member, when described as merely "above" or "below", unless otherwise stated, it includes both of the following cases: a case wherein some member is placed directly on or directly below the other member so as to be in contact with the other member, and a case wherein some member is placed on the upper side or the lower side of the other member via yet another member. Also, in the present descriptions, on the occasion of expressing an aspect wherein some member is placed on the surface of the other member, when described as merely "on the surface", unless otherwise stated, it includes both of the following cases: a case wherein some member is placed directly on or directly below the other member so as to be in contact with the other member, and a case wherein some member is placed on the upper side or the lower side of the other member via yet another member.

The decorative sheet, and the decorative member in the present disclosure are hereinafter described in detail.

### A. Decorative sheet

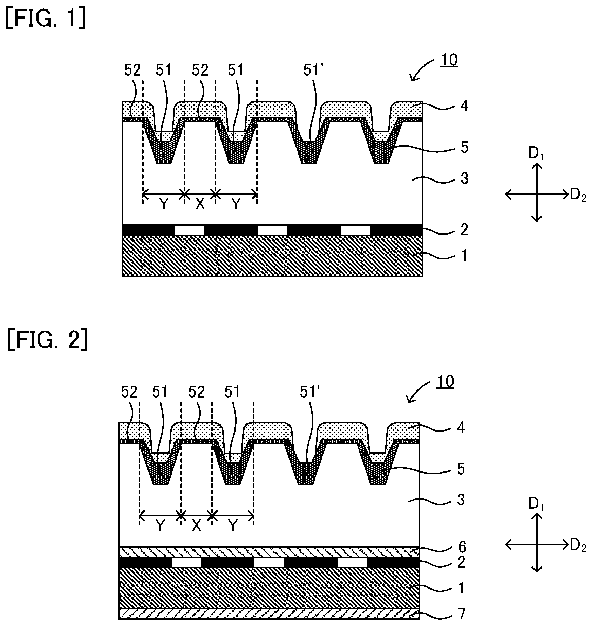

FIG. 1 is a schematic cross-sectional view exemplifying the decorative sheet in the present disclosure. The decorative sheet 10 shown in FIG. 1 comprises: a substrate layer 1; a design layer 2 disposed on one surface of the substrate layer 1; a resin layer 3 disposed on a surface of the design layer 2 that is opposite side to the substrate layer 1; and a surface protective layer 4 disposed on a surface of the resin layer 3 that is opposite side to the design layer 2. The resin layer 3 has a convexoconcave shape including a convex portion X and a concave portion Y, on a surface protective layer 4 side surface. Also, as shown in FIG. 1, in a cross-sectional view of the decorative sheet 10 in the thickness direction D₁, the convex portion X and the concave portion Y are alternately arranged in the direction D₂ orthogonal to the thickness direction D₁.

The decorative sheet 10 shown in FIG. 1 includes a designability improving layer 5, on the surface protective layer 4 side surface of the resin layer 3, including at least one of a colorant and a matting agent. The designability improving layer 5 includes a filled portion 51 disposed in the concave portion Y, and a non-filled portion 52 disposed on the convex portion X. Also, as shown in FIG. 1, as the filled portion 51, the decorative sheet 10 includes a filled portion 51' where at least a part thereof is not covered by the surface protective layer 4. The surface protective layer 4 and the designability improving layer 5 respectively include an ultraviolet ray absorber. Also, as shown in FIG. 2, the decorative sheet 10 may include a first adhesive layer 6 between the design layer 2 and the resin layer 3. Similarly, the decorative sheet 10 may include a second adhesive layer 7 on the surface of the substrate layer 1 that is opposite side to the design layer 2.

According to the present disclosure, in addition to the surface protective layer, since the designability improving layer (particularly, the filled portion) includes an ultraviolet ray absorber, a decorative sheet with good weather resistance can be obtained even when the filled portion where at least a part thereof is not covered by the surface protective layer, exists. As described above, the surface protective layer is usually disposed on the entire surface of the decorative sheet. Meanwhile, the surface of the filled portion may not be covered by the surface protective layer unintentionally, in some cases. For example, when the concave portion is deeper than before; when the area of the concave portion is larger than before; when the wettability of the designability improving layer is low so that the surface protective layer is easily repelled; or when the surface protective layer is thinner than before, the decorative sheet may include a filled portion where at least a part thereof is not covered by the surface protective layer. In such cases, the filled portion not covered by the surface protective layer is inferior in weather-resistant than the filled portion covered by the surface protective layer. In particular, since exterior members are exposed to environments likely to be irradiated with sunlight, resins tend to deteriorate more easily than interior members. Therefore, when a decorative sheet including a filled portion not covered by the surface protective layer is used for an exterior member, for example, the resin component of the resin layer tends to deteriorate due to ultraviolet rays. Therefore, decorative sheets, particularly for those used for exterior members exposed to harsh environments, are required to have better weather resistance. In response to the above, in the present disclosure, since the designability improving layer (particularly, the filled portion) includes an ultraviolet ray absorber, in addition to the surface protective layer, a decorative sheet with good weather resistance can be obtained even when the filled portion where at least a part thereof is not covered by the surface protective layer, exists.

### 1. Designability improving layer

The designability improving layer in the present disclosure is disposed on the surface protective layer side surface of the resin layer. The designability improving layer includes at least one of a colorant and a matting agent. Further, the designability improving layer includes an ultraviolet ray absorber. Also, the designability improving layer includes at least a filled portion disposed in the concave portion of the resin layer. In the present disclosure, a high designability can be obtained by combining the design layer and the filled portion. In particular, by disposing the filled portion in the concave portion of a wood grain vessel channel pattern, a design similar to the actual wood grain can be expressed.

### (1) Structure of designability improving layer

The designability improving layer includes at least a filled portion disposed in the concave portion of the resin layer. Also, as shown in FIG. 1, the decorative sheet 10 includes a filled portion 51' where at least a part thereof is not covered by the surface protective layer. The filled portion 51' is typically a portion that is not covered by other layers such as the surface protective layer 4.

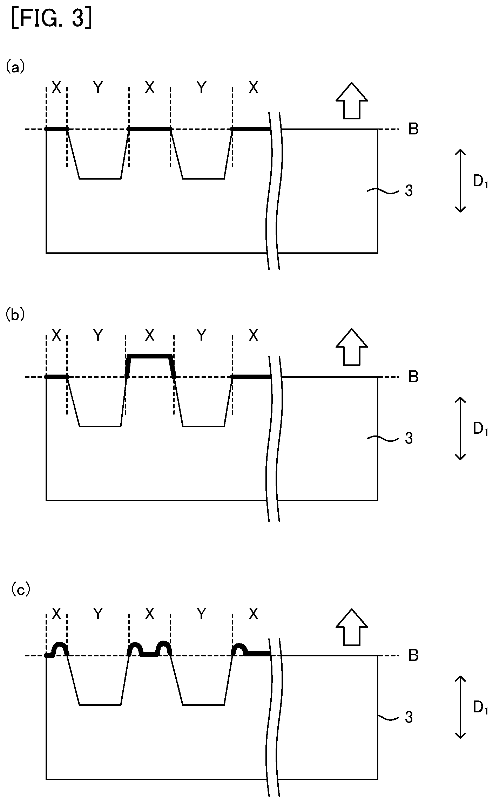

The filled portion is disposed in the concave portion of the resin layer. As described below, the resin layer includes a convex portion and a concave portion. The convex portion and the concave portion are defined as follows. In other words, as shown in FIG. 3(a), among the surface protective layer 4 side surface of the resin layer 3, a surface on which the convexoconcave is not formed is regarded as a reference surface B.

The convex portion X refers to a portion located at the same position as the reference surface B and a position protruding from the reference surface B in the thickness direction D₁. The concave portion Y refers to a portion located at a recessed position than the reference surface B in the thickness direction D₁. In FIG. 3(a), every convex portion X includes only a flat surface at the same position as the reference surface B in the thickness direction D₁. Meanwhile, in FIG. 3(b), the convex portion X in the middle protrudes from the reference surface B in the thickness direction D₁. The convex portion X on the left side and the convex portion X on the right side include only a flat surface at the same position as the reference surface B in the thickness direction D₁. Also, in FIG. 3(c), although every convex portion X includes a flat surface at the same position as the reference surface B in the middle, in the thickness direction D₁, the edge portion of the convex portion X protrudes from the reference surface B in the thickness direction D₁.

Here, the condition of the filled portion in the concave portion is observed by a cross-sectional observation of the decorative sheet. The filled portion wherein the entire thereof is covered by the surface protective layer (the filled portion completely covered by the surface protective layer) is regarded as a filled portion A, and the number of the filled portion A is designated as N₁; and the filled portion wherein at least a part of the filled portion is not covered by the surface protective layer is regarded as a filled portion B, and the number of filled portion B is designated as N₂.

As described above, in the present disclosure, the filled portion B wherein at least a part thereof is not covered by the surface protective layer, is included. The ratio of such filled portion B, that is, N₂/(N₁ + N₂), is usually more than 0% and less than 100%, may be more than 0% and 50% or less, and may be more than 0% and less than 10%.

The measurement of N₁ and N₂ is carried out by observing the cross-section as follows. The number of the samples is at least 10 or more, may be 30 or more, may be 50 or more, and may be 100 or more. The larger the number of samples, the better the accuracy. When selecting measurement points, attention should be paid to avoiding bias as much as possible.

### <Method for observing cross-section>

The observation portion is cut out from the decorative sheet, embedded in photocurable resin, and then, a cross-section is prepared using microtome (diamond knife specification, 0.2 µm cut finish). The prepared cross section is observed using SEM (S-4800 TYPE2 from Hitachi High-Tech Corporation) at an acceleration voltage of 3.0 kV, a current of 20 µA, and a magnification of 5000-fold.

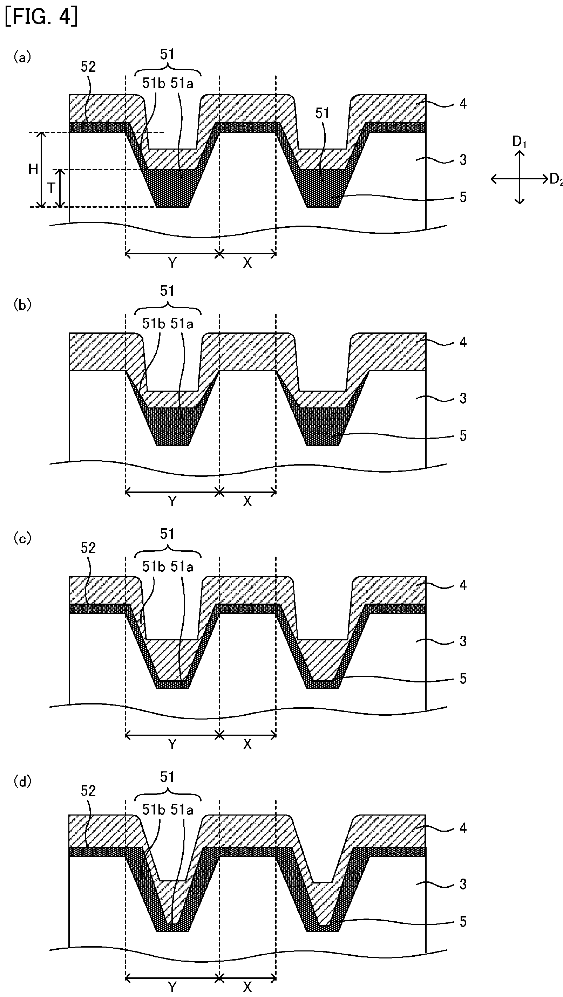

As shown in FIG. 4(a), the filled portion 51 may include a bottom surface portion 51a disposed on the bottom surface of the concave portion Y, and a wall surface portion 51b disposed on the wall surface of the concave portion Y. In FIG, 4(a), the bottom surface portion 51a and the wall surface portion 51b are arranged in a continuous manner. Also, the wall surface portion 51b and non-filled portion 52 are also arranged in a continuous manner. That is, the filled portion 51 and the non-filled portion 52 are arranged in a continuous manner.

As shown in FIG. 4(a), the thickness of the bottom surface portion 51a is regarded as T, and the depth of the concave portion Y of the resin layer 3 is regarded as H. The thickness T is, for example, 2 µm or more, and may be 5 µm or more. Meanwhile, the thickness T is, for example, 100 µm or less, and may be 80 µm or less. Also, the ratio (T/H) of the thickness T with respect to the depth H is, for example, 2% or more, may be 5% or more, and may be 10% or more. Meanwhile, T/H is, for example, 100% or less, may be 50% or less, and may be 30% or less. The smaller the T/H, the more the filled portion not covered by the surface protective layer is likely to occur.

As shown in FIG. 4(a), the designability improving layer 5 may include non-filled portion 52 disposed on the convex portion X of the resin layer 3. In this case, the non-filled portion 52 is disposed between the convex portion X and the surface protective layer 4. Meanwhile, as shown in FIG. 4(b), the designability improving layer 5 may not include a non-filled portion disposed on the convex portion X of the resin layer 3. In this case, the convex portion X and the surface protective layer 4 are disposed not via the designability improving layer 5. The convex portion X and the surface protective layer 4 may be disposed so as to be in contact with each other, and may be disposed via, for example, a primer layer.

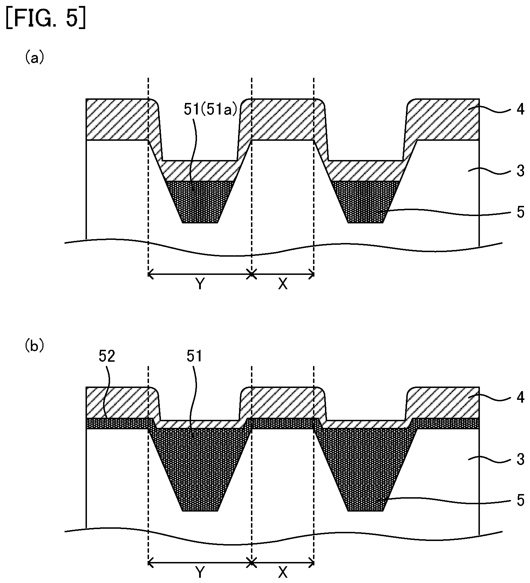

As shown in FIG. 4(c), the bottom surface portion 51a and the wall surface portion 51b may be of the same thickness. Being of the same thickness means that the difference in thickness between the two is 3 µm or less. Meanwhile, as shown in FIG. 4(a) and FIG. 4(b), the thickness of the bottom surface portion 51a may be more than the thickness of the wall surface portion 51b. Also, as shown in FIG. 4(d), the thickness of the bottom surface portion 51a may be less than the thickness of the wall surface portion 51b. The difference in thickness between the two is usually more than 3 µm. Also, as shown in FIG. 5(a), the filled portion 51 may include the bottom surface portion 51a, and may not include wall surface portion 51b. Also, as shown in FIG. 5(b), the filled portion 51 may completely fill the concave portion Y, and as shown in FIG. 5(a), the filled portion 51 may not completely fill the concave portion Y.

### (2) Composition of designability improving layer

The designability improving layer includes at least one of a colorant and a matting agent. Also, the designability improving layer includes an ultraviolet ray absorber. It is preferable that the designability improving layer further includes at least one of a photostabilizer, a binder resin, and an additive.

### (i) Ultraviolet ray absorber

The designability improving layer includes one type or two types or more ultraviolet ray absorbers. When the designability improving layer (particularly, the filled portion) includes the ultraviolet ray absorber, a decorative sheet with good weather resistance is obtained even when the filled portion is not completely covered with the surface protective layer.

Examples of the ultraviolet ray absorber may include organic based ultraviolet ray absorber such as triazine based ultraviolet ray absorbers, benzotriazole based ultraviolet ray absorbers, benzophenone based ultraviolet ray absorbers, oxybenzophenone based ultraviolet ray absorbers, salicylic acid ester based ultraviolet ray absorbers, and cyano(meth)acrylate based ultraviolet ray absorbers; and inorganic based ultraviolet ray absorbers such as titanium dioxide, cerium oxide, and zinc oxide. Among these, triazine based ultraviolet ray absorbers are more preferable.

Examples of the triazine based ultraviolet ray absorbers may include hydroxyphenyltriazine based ultraviolet ray absorbers. Examples of the hydroxyphenyltriazine based ultraviolet ray absorber may include 2-(2-hydroxy-4-[1-octyloxycarbonylethoxy]phenyl)-4,6-bis(4-phenylphenyl)-1,3,5-triazine, 2-[4-[(2-hydroxy-3-dodecyloxypropyl)oxy]-2-hydroxyphenyl]-4,6-bis(2,4-dimethylphenyl)-1,3,5-triazine, 2,4-bis[2-hydroxy-4-butoxyphenyl]-6-(2,4-dibutoxyphenyl)-1,3,5-triazine, 2-[4-[(2-hydroxy-3-tridecyloxypropyl)oxy]-2-hydroxyphenyl]-4,6-bis(2,4-dimethylphenyl)-1,3,5-triazine, 2-[4-[(2-hydroxy-3-(2'-ethyl)hexyl)oxy]-2-hydroxyphenyl]-4,6-bis(2,4-dimethylphenyl)-1,3,5-triazine, and 2-(4,6-diphenyl-1,3,5-triazine-2-yl)-5[2-(2-ethylhexanoyloxy)ethoxy]phenol.

The content of the ultraviolet ray absorber in the designability improving layer is preferably 0.1 parts by mass or more and 30 parts by mass or less, more preferably 2 parts by mass or more and 20 parts by mass or less, and particularly preferably 5 parts by mass or more and 15 parts by mass or less, with respect to 100 parts by mass of the binder resin described below. When the content of the ultraviolet ray absorber is high, the ultraviolet ray absorber may bleed-out, and when the content of the ultraviolet ray absorber is low, sufficient ultraviolet ray absorbing property may not be obtained.

Since the designability improving layer is basically covered with the surface protective layer, the possibility of bleeding out of the ultraviolet ray absorber is lower than the surface protective layer. Therefore, the ratio of the ultraviolet ray absorber included in the designability improving layer is preferably more than the ratio of the ultraviolet ray absorber included in the surface protective layer. The ratio of the ultraviolet ray absorber included in the designability improving layer is the ratio of the ultraviolet ray absorber with respect to 100 parts by mass of the binder resin described below. Similarly, the ratio of the ultraviolet ray absorber included in the surface protective layer is the ratio of the ultraviolet ray absorber with respect to 100 parts by mass of the binder resin described below.

### (ii) Matting agent and colorant

The designability improving layer may include a matting agent. Examples of the matting agent may include inorganic particles and organic particles. Examples of the inorganic particles may include particles of inorganic materials such as silica. Examples of the organic particles may include particles of organic materials such as cross-linked alkyl, cross-linked styrene, benzoguanamine resin, urea-formaldehyde resin, phenolic resin, polyethylene, and nylon. The particle size (D₅₀) of the matting agent is not particularly limited, and is, for example, 2 µm or more and 6 µm or less, and may be 3 µm or more and 5 µm or less. The particle size (D₅₀) of the matting agent can be determined by a laser diffraction particle size distribution measurement device. The content of the matting agent included in the designability improving layer is, for example, 0.5% by mass or more and 15% by mass or less, and may be 2% by mass or more and 10% by mass or less.

The designability improving layer may include a colorant. Examples of the colorant may include inorganic pigments such as carbon black (cake ink), iron black, titanium white, antimony white, lead yellow, titanium yellow, Bengal red, cadmium red, ultramarine blue, and cobalt blue; organic pigments or dyes such as quinacridone red, isoindolinone yellow, and phthalocyanine blue; metallic pigments including scaly foil pieces such as aluminum and brass; and pearlescent (pearl) pigments including scaly foil pieces such as titanium dioxide-coated mica, and basic lead carbonate.

### (iii) Binder resin

The designability improving layer preferably includes a binder resin. Examples of the binder resins may include urethane based resins, acrylic polyol based resins, acrylic based resins, ester based resins, amide based resins, butyral based resins, styrene based resins, urethane-acrylic copolymers, polycarbonate based urethane-acrylic copolymers, vinyl chloride-vinyl acetate copolymers, vinyl chloride-vinyl acetate-acrylic copolymers, chlorinated propylene based resins, cellulose nitrate based resins, and cellulose acetate based resins. The designability improving layer may include only one type of the resin, and may include two types or more.

The designability improving layer may include a cured product of the binder resin. Examples of the curing agent may include isocyanate based curing agents, and epoxy based curing agents. In particular, the cured product of the binder resin is preferably a cured product obtained by cross-link curing polyol based resins, such as acrylic polyol based resins, with an isocyanate based curing agent.

The binder resin preferably includes polycarbonate based urethane acrylic copolymers and acrylic polyols. The polycarbonate based urethane-acrylic copolymer is a resin obtained by radical polymerization of acrylic monomer, using polycarbonate based polyurethane polymer obtained by reacting polycarbonate diol and (di)isocyanate, as a radical polymerization initiator, and it is highly flexible and high in weather resistance.

Examples of the (di)isocyanate may include aromatic isocyanates, aliphatic isocyanates, and alicyclic isocyanates. Examples of the aromatic isocyanate may include 4,4'-diphenylmethane diisocyanate, 2,4-tolylene diisocyanate, 1,5-naphthalene diisocyanate, n-isocyanate phenylsulfonylisocyanate, and o- or p-isocyanate phenylsulfonylisocyanate. Examples of the aliphatic isocyanate may include 1,6-hexamethylene diisocyanate. Examples of the alicyclic diisocyanate may include isophorone diisocyanate, hydrogenated xylylene diisocyanate, and hydrogenated diphenylmethane diisocyanate. Also, the adducts, and multimers of them may be used. These may be used alone, and two or more types may be used. Among these, in view of imparting good weather resistant close adhesiveness, for example, aliphatic isocyanates, such as hexamethylene diisocyanate; or alicyclic isocyanates such as isophorone diisocyanate and hydrogenated diphenylmethane diisocyanate are preferable.

Examples of the acrylic monomer may include alkyl (meth)acrylates such as (meth)acrylate, methyl(meth)acrylate, ethyl(meth)acrylate, n-propyl(meth)acrylate, isopropyl(meth)acrylate, n-butyl(meth)acrylate, and isobutyl(meth)acrylate, and one type of these may be used alone, and two types or more may be used in a combination.

Although the mass ratio of the acrylic component and the urethane component in polycarbonate based urethane acrylic copolymer is not particularly limited, the mass ratio of the urethane component: acrylic component in terms of weather resistance and solvent resistance is preferably, for example, 80:20 to 20:80, and more preferably 70:30 to 30:70.

Also, the binder preferably includes acrylic polyols. The acrylic polyol is one wherein a hydroxyl group is introduced to the acrylic monomer described above. For example, it may be synthesized by copolymerizing the acrylic monomer described above, with an acrylic monomer including a hydroxyl group such as (meth)acrylic acid-2-hydroxyethyl, and (meth)acrylic acid-2-hydroxy-3-phenoxypropyl. These acrylic polyols function as a crosslinking agent.

The mass ratio of the polycarbonate based urethane acrylic copolymer and the acrylic polyol is preferably, for example, 80:20 to 20:80. Within this range, the binder resin becomes harder due to the two-component cross-linking with isocyanate, the solvent resistance is improved, and also, sufficient flexibility can be obtained.

### (iv) Others

The designability improving layer may include one type or two types or more photostabilizers. Examples of the photostabilizer may include hindered amine based photostabilizers. Examples of the hindered amine based photostabilizer may include 1,2,2,6,6-pentamethyl-4-piperidinyl methacrylate, bis(1,2,2,6,6-pentamethyl-4-piperidyl)sebacate, bis(2,2,6,6-pentamethyl-4-piperidyl)sebacate, bis(1,2,2,6,6-pentamethyl-4-piperidinyl)sebacate, methyl(1,2,2,6,6-pentamethyl-4-piperidinyl)sebacate, and 2,4-bis[N-butyl-N-(1-cyclohexyloxy-2,2,6,6-tetramethylpiperidine-4-yl)amino]-6-(2-hydroxyethylamine)-1,3,5-triazine.

The content of the photostabilizer included in the designability improving layer is preferably, for example, 0.1 parts by mass or more and 8 parts by mass or less, more preferably 0.3 parts by mass or more and 6 parts by mass or less, and particularly preferably 0.5 parts by mass or more and 4 parts by mass or less, with respect to 100 parts by mass of the binder resin. When the content of the photostabilizer is high, the photostabilizer may bleed-out, and when the content of the photostabilizer is low, sufficient photostabilizing property may not be obtained.

The designability improving layer may include an additive. Examples of the additive may include antimicrobial, antiviral, and antioxidant. When the designability improving layer (particularly, the filled portion) and the surface protective layer respectively include the antimicrobial, a decorative sheet with good antimicrobial properties can be obtained. Also, when the designability improving layer (particularly, the filled portion) and the surface protective layer respectively include the antiviral, a decorative sheet with good antiviral properties can be obtained. Also, when the designability improving layer (particularly, the filled portion) and the surface protective layer respectively include the antioxidant, a decorative sheet with good antioxidant properties can be obtained. Examples of the antimicrobial, antiviral and antioxidant may include ones similar to those exemplified for the surface protective layer described below.

### (3) Designability improving layer

Examples of the method for forming a designability improving layer may include a method wherein a resin layer having a convexoconcave shape (convex portion and concave portion) is coated with a composition for a designability improving layer, and the surface thereof is raked (wiping) with a jig such as a doctor blade. The concave portion is filled with the composition, and a filled portion is formed.

### 2. Surface protective layer

The surface protective layer in the present disclosure is disposed on the surface of the resin layer that is opposite side to the design layer. By providing the surface protective layer, the decorative sheet can be protected. Also, as shown in FIG. 1, the decorative sheet 10 may include a surface protective layer 4 as the outermost layer.

### (1) Structure of surface protective layer

The surface protective layer in the present disclosure includes a portion not covering the surface of the filled portion. This portion is usually not formed intentionally, and it is formed unintentionally.

### (2) Composition of surface protective layer

The surface protective layer includes an ultraviolet ray absorber and a resin component. The surface protective layer may further include at least one of a photostabilizer, and an additive.

### (i) Ultraviolet ray absorber

The surface protective layer includes one type or two types or more ultraviolet ray absorbers. The ultraviolet ray absorber is similar to the contents described in "1. Designability improving layer" above. The surface protective layer preferably includes a triazine based ultraviolet ray absorber.

In the present disclosure, the surface protective layer and the filled portion respectively include an ultraviolet ray absorber. The ultraviolet ray absorber included in the surface protective layer and the ultraviolet ray absorber included in the filled portion may or may not be the same compound.

The content of the ultraviolet ray absorber in the surface protective layer is preferably 0.05 parts by mass or more and 10 parts by mass or less, more preferably 0.3 part by mass or more and 8 parts by mass or less, and particularly preferably 1 part by mass or more and 5 parts by mass or less, with respect to 100 parts by mass of the binder resin described below. When the content of the ultraviolet ray absorber is high, the ultraviolet ray absorber may bleed-out, and when the content of the ultraviolet ray absorber is low, sufficient ultraviolet ray absorbing property may not be obtained.

### (ii) Resin component

The surface protective layer includes a resin component. The resin component mainly functions as the binder resin. The surface protective layer preferably includes at least one of a resin composition, and a cured product thereof, as the resin component. The cured product may be a cured product obtained by curing a curable resin composition by ionizing radiation, and may be a cured product obtained by curing a curable resin composition by heat.

Examples of the curable resin composition may include ionizing radiation curable resin compositions and thermosetting resin compositions. In terms of abrasion resistance and productivity, the ionizing radiation curable resin compositions are preferable. In other words, the surface protective layer preferably includes a cured product of an ionizing radiation curable resin composition as the resin component.

Specific examples of the ionizing radiation curable resin composition may include an electron beam curable resin composition, and an ultraviolet ray curable resin composition. In particular, the ionizing radiation curable resin compositions have advantages such as less odor and less coloring, since a polymerization initiator is not necessary.

The ionizing radiation curable resin composition is a composition including a compound including an ionizing radiation curable functional group (hereinafter, it may be referred to as "ionizing radiation curable compound"). The ionizing radiation curable functional group is a group cross-link cured by an irradiation of ionizing radiation, and specific examples thereof may include functional groups including ethylenically double bonds such as a (meth)acryloyl group, a vinyl group, and an allyl group. Also, other specific examples of the ionizing radiation curable functional group may include an epoxy group, and an oxetanyl group. Also, in the present descriptions, the (meth)acryloyl group refers to an acryloyl group or a methacryloyl group. Also, in the present descriptions, the (meth)acrylate refers to an acrylate or a methacrylate. Also, the ionizing radiation refers to, among electromagnetic waves and charged particle beams, one having energy quantum capable of polymerizing or crosslinking molecules. Specific examples of the ionizing radiation may include ultraviolet ray (UV), and electron beam (EB). Other specific examples of the ionizing radiation may include electromagnetic waves such as X-rays and γ-rays; and charged particle beams such as α-rays and ion rays.

The ionizing radiation curable resin composition may include only one type of the ionizing radiation curable compound, and may include two types or more of them. The type of the ionizing radiation curable compound is not particularly limited, and known polymerizable monomers and known polymerizable oligomers (polymerizable prepolymers) can be used.

The ionizing radiation curable compound preferably includes a compound including two or more ethylenically unsaturated bonding groups. Among them, the ionizing radiation curable compound preferably includes a polyfunctional (meth)acrylate based compound including two or more ethylenically unsaturated bonding groups. The polyfunctional (meth)acrylate based compound may be a monomer, and may be an oligomer.

The polyfunctional (meth)acrylate based compound may be a bifunctional (meth)acrylate based monomer, and may be a trifunctional or more functional (meth)acrylate based monomer. Examples of the bifunctional (meth)acrylate based monomer may include ethylene glycol di(meth)acrylate, bisphenol A tetraethoxydiacrylate, bisphenol A tetrapropoxydiacrylate, and 1,6-hexanediol diacrylate. Examples of the trifunctional or more functional (meth)acrylate based monomer may include trimethylolpropane tri(meth)acrylate, pentaerythritol tri(meth)acrylate, pentaerythritol tetra(meth)acrylate, dipentaerythritol hexa(meth)acrylate, dipentaerythritol tetra(meth)acrylate, and isocyanuric acid modified tri(meth)acrylate.

Examples of the polyfunctional (meth)acrylate based oligomer may include acrylate based polymers such as urethane (meth)acrylate, epoxy (meth)acrylate, polyester (meth)acrylate and polyether (meth)acrylate.

The urethane (meth)acrylate is obtained, for example, by the reaction of polyalcohols and organic diisocyanates with hydroxy (meth)acrylate. Also, epoxy (meth)acrylate is obtained, for example, by the reaction of epoxy based resins with (meth)acrylic acid. At least one of the polybasic acids and phenols may be further used in this reaction. The epoxy based resin may be bifunctional, and may be trifunctional or more functional. Also, examples of the epoxy based resin may include aromatic epoxy based resins, alicyclic epoxy based resins, and aliphatic epoxy based resins.

The ionizing radiation curable compound may include silicone (meth) acrylate. By using the silicone (meth) acrylate, the resistance to contamination of the surface protective layer is improved. Examples of the silicone (meth) acrylate may include silicone oil including polysiloxane. The silicone (meth) acrylate may be a modified silicone oil wherein a (meth) acrylic group is introduced at the end of the polysiloxane. The content of the silicone (meth) acrylate is, for example, 1 part by mass or more and 7 parts by mass or less, and may be 2 parts by mass or more and 5 parts by mass or less, with respect to 100 parts by mass of the ionizing radiation curable compound (excluding the silicone (meth) acrylate).

When the ionizing radiation curable compound is an ultraviolet ray curable compound, the ionizing radiation curable resin composition preferably includes an additive such as a photopolymerization initiator and a photopolymerization accelerator. Examples of the photopolymerization initiator may include acetophenone, benzophenone, α-hydroxyalkylphenone, Michler's ketone, benzoin, benzyldimethylketol, benzoyl benzoate, α-acyloxime esters, and thioxanthones. Examples of the photopolymerization accelerator may include p-dimethylaminobenzoic acid isoamyl ester and p-dimethylaminobenzoic acid ethyl ester.

Meanwhile, the thermosetting resin composition is a composition including at least thermosetting resin. This resin composition cures by heating. Examples of the thermosetting resin may include acrylic based resins, urethane based resins, phenolic based resins, urea melamine based resins, epoxy based resins, unsaturated polyester based resins, and silicone based resins. The thermosetting resin composition may include an additive such as curing agent and curing catalyst, if necessary.

### (iii) Photostabilizer

The surface protective layer in the present disclosure preferably includes one type or two types or more photostabilizers. The photostabilizer is similar to the contents described in "1. Designability improving layer" above.

In the present disclosure, the surface protective layer and the filled portion preferably include a photostabilizer, respectively. The photostabilizer included in the surface protective layer and the photostabilizer included in the filled portion may or may not be the same compound.

The content of the photostabilizer included in the surface protective layer is preferably, for example, 0.05 parts by mass or more and 5 parts by mass or less, more preferably 0.3 part by mass or more and 3 parts by mass or less, and particularly preferably 0.5 parts by mass or more and 2 parts by mass or less, with respect to 100 parts by mass of the binder resin described below. When the content of the photostabilizer is high, the photostabilizer may bleed-out, and when the content of the photostabilizer is low, sufficient photostabilizing property may not be obtained.

### (iv) Additive

The surface protecting layer may include an additive. Examples of the additive may include antimicrobial, antiviral, and antioxidant. Examples of the antimicrobial may include inorganic based antimicrobials and organic based antimicrobials. The inorganic based antimicrobials are generally safer than the organic based antimicrobials, and are desirable for the durability and heat resistance. The inorganic based antimicrobial is an antimicrobial wherein antimicrobial metals such as silver, copper, and zinc are supported by various inorganic material carrier.

The antivirals can be broadly classified into organic based and inorganic based. Examples of the organic based antiviral may include quaternary ammonium salt based, quaternary phosphonium salt based, pyridine based, pyrithione based, benzoimidazole based, organic iodine based, isothiazoline based, anionic based and ether based. Examples of the inorganic based antivirals may include antivirals wherein metal ions such as silver, copper, and zinc are supported by a carrier such as zeolite, apatite, zirconia, glass, and molybdenum oxide.

Examples of the antioxidant may include a phenol based antioxidant, a sulfur based antioxidant, and a phosphorus based antioxidant. In particular, the phosphorus based antioxidant can effectively suppress the discolorment, due to light, of the surface protective layer.

### (3) Surface protective layer

The thickness of the surface protective layer is not particularly limited, and is, for example, 1.0 µm or more and 20 µm or less, may be 1.5 µm or more and 15 µm or less, and may be 2.0 µm or more and 10 µm or less.

Examples of the method for forming a surface protective layer may include a method wherein the surface of a designability improving layer is coated with a composition for a surface protective layer including the component described above, dried, and cured. The coating method is not particularly limited if it is capable of coating so that the entire decorative sheet is covered with the surface protective layer, and for example, gravure coating method is preferable, and particularly, gravure direct coating method is preferable. Examples of the method for curing the composition for a surface protective layer may include a method wherein an ionizing radiation is irradiated, and a heat treatment.

### 3. Resin layer

The resin layer in the present disclosure is disposed on a surface of the design layer that is opposite side to the substrate layer.

### (1) Structure of resin layer

The resin layer has a convexoconcave shape including a convex portion and a concave portion, on a surface protective layer side surface. The convex portion or the concave portion in the resin layer may be disposed corresponding to the pattern of the design layer. For example, when the design layer has a wood-grain pattern, the convex portion or the concave portion may be disposed in the region so as to overlap the duct of the wood-grain pattern in a plan view. Also, the convex portion or the concave portion may be disposed so as to overlap the latewood portion of the tree-ring of the wood-grain pattern in a plan view. Also, the convex portion or the concave portion may be disposed so as to overlap the gnarl of the wood-grain pattern in a plan view.

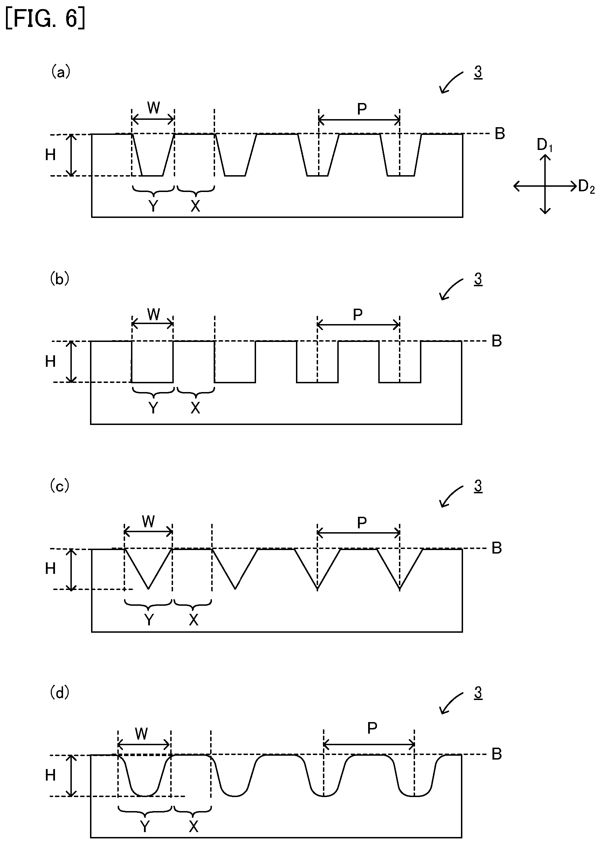

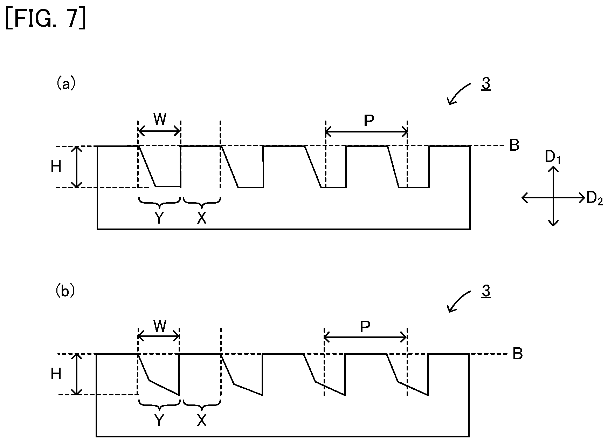

The cross-sectional shape of the concave portion is not particularly limited. FIGS. 6 are schematic cross-sectional views exemplifying the convexoconcave shape of the resin layer in the present disclosure. As shown in FIG. 6(a), the cross-sectional shape of the concave portion Y of the resin layer 3 may be of a pedestal shape. Also, as shown in FIGS. 6(b) to (d), the cross-sectional shape of the concave portion Y of the resin layer 3 may be a rectangular shape (FIG. 6(b)), may be a triangular shape (FIG. 6(c)), and may be a shape including a curved corner portion (such as U-shaped) (FIG. 6(d)). Also, the angle of the inclination of the wall surfaces in one concave portion Y may be different from each other (FIG. 7(a)). Also, the bottom surface may also be inclined (FIG. 7(b)).

The plan-view shape of the concave portion is not particularly limited. The plan-view shape of the concave portion may be a line form, and may be a dot form. Examples of the plan-view shape of each dot may include a circular shape, an oval shape, a triangular shape, and a rectangular shape. Specific examples of the pattern of the concave portion may include a duct groove of wood-grain plate, a stone plate surface, a cloth surface texture, a pear skin finish, a sand-grain, a hairline, and a hatchingline groove.

As shown in FIGS. 6 and FIGS. 7, the width of the concave portion Y is regarded as W. The width W may be, for example, 20 µm or more, may be 50 µm or more, and may be 100 µm or more. Meanwhile, the width W is, for example, 1 cm or less, may be 5 mm or less, and may be 2 mm or less. The width W of the concave portion Y is the length of the opening in the concave portion Y (length of the opening in direction D₂ orthogonal to the thickness direction D₁).

As shown in FIGS. 6 and FIGS. 7, the depth of the concave portion Y is regarded as H. The depth H is, for example, 5 µm or more, may be 10 µm or more, and may be 20 µm or more. Meanwhile, the depth H is, for example, 200 µm or less, may be 150 µm or less, and may be 100 µm or less. The depth H of the concave portion Y is the maximum distance between the bottom portion of the concave portion Y and the boundary between the concave portion Y and the convex portion X (distance in the thickness direction D₁).

As shown in FIGS. 6 and FIGS. 7, the pitch between the adjacent concave portions Y is regarded as P. The pitch P is, for example, 5 µm or more, may be 10 µm or more, and may be 20 µm or more. Meanwhile, the pitch P is, for example, 5 cm or less, may be 1 cm or less, and may be 5 mm or less. The pitch P between adjacent concave portions Y is the center-to-center distance of the adjacent concave portion Y (center-to-center distance in direction D₂ orthogonal to the thickness direction D₁).

### (2) Composition of resin layer

The resin layer includes resin. As the resin, thermoplastic resins are preferable. Examples of the thermoplastic resin may include polyolefin based resins such as polyethylene and polypropylene, soft, semi-hard or hard polyvinyl chloride, polyethylene terephthalate, polybutylene terephthalate, polyamide, ethylene-vinyl acetate copolymer, ethylene-acrylic acid copolymer, ethylene-acrylic acid ester copolymer, ionomers, acrylic acid ester, and methacrylic acid ester. In particular, polyolefin based resins such as polypropylene are preferable.

The resin layer may be colored as necessary. In this case, colorants (pigments or dyes) can be added, to the thermoplastic resin described above, to color the resin layer. As the colorant, commonly known or commercially available pigments or dyes may be used as appropriate. One type or two types or more of these can be selected, and the amount of the colorant added can be appropriately set according to the desired color tint.

The resin layer preferably includes a weather resistant agent. Examples of the weather resistant agent may include an ultraviolet ray absorber and a photostabilizer. The ultraviolet ray absorber and the photostabilizer are similar to the contents described in "1. Designability improving layer" above.

The content of the ultraviolet ray absorber included in the resin layer is, for example, 0.05% by mass or more and 5% by mass or less, and may be 0.3% by mass or more and 3% by mass or less. Also, the content of the photostabilizer included in the resin layer is, for example, 0.05% by mass or more and 5% by mass or less, and may be 0.3% by mass or more and 3% by mass or less.

The resin layer may include various additives such as fillers, frosting agents (matting agents), flame retardants, lubricants, antistatic agents, antioxidants, and soft components (such as rubber), if necessary.

### (3) Resin layer

The thickness of the resin layer is not particularly limited, and is, for example, 20 µm or more and 250 µm or less, and may be 50 µm or more and 200 µm or less. Also, the rein layer preferably has transparency capable of discerning the design layer. The resin layer may be colorless and transparent, and may be colored and transparent.

Examples of the method for forming a resin layer may include the following methods. Examples of the method may include a method wherein a film for a resin layer is firstly formed with a composition for forming a resin layer, using an extruder such as a T-die extruder, and a convexoconcave shape (convex portion and concave portion) is formed om the surface that is opposite to the design layer.

The method for forming a convexoconcave is not particularly limited, and examples may include an embossing process. In the embossing process, a film for a resin layer including a convexoconcave can be obtained by, for example, after heating and softening the film for a resin layer on a heating drum, further heating with an infrared ray radiation heater, pressurizing, shaping, cooling and fixing with an embossing plate provided with a convexoconcave pattern of a desired shape. The embossing process can be carried out, for example, using a singlewafer embossing machine or a rotary embossing machine. Also, a method wherein an embossing process is carried out at the same time in the step of stacking the resin layer on the design layer (so-called a doubling embossing method) may be used.

In order to improve the close adhesiveness to the adjacent layer, the surface protective layer side surface of the resin layer, or the design layer side surface of the resin layer may be subjected to a surface treatment as necessary. Examples of the surface treatment may include a corona discharge treatment.

### 4. Design layer

The design layer in the present disclosure is disposed between the substrate layer and the resin layer. In the present disclosure, the designability of the decorative sheet is improved by the synergistic effect of the design layer and the filled portion. Also, in a plan view of the decorative sheet in the thickness direction, the design layer may be disposed on the entire surface of the decorative sheet, and may be disposed on a part of the decorative sheet.

Examples of the design layer may include a solid layer (a layer all painted in one color) and a pattern layer (a layer printed with ink). As the design layer, the decorative sheet may include a solid layer and a pattern layer. Examples the pattern (design) in the pattern layer may include wood-grain, stone-grain, sand-grain, tile laying design, brick laying design, fabric-grain, leather tie-dyed pattern, geometric shapes, letters, symbols, abstract patterns, and plant and flower patterns.

The design layer usually includes a colorant and a binder resin. Examples of the colorant may include inorganic pigments such as carbon black (cake ink), iron black, titanium white, antimony white, lead yellow, titanium yellow, Bengal red, cadmium red, ultramarine blue, and cobalt blue; organic pigments (including dyes) such as quinacridone red, isoindolinone yellow, nickel azo complex, phthalocyanine blue, and azomethineazoblack; metallic pigments such as aluminum and brass; and pearl pigments such as titanium dioxide-coated mica, and basic lead carbonate.

Examples of the binder resins may include urethane based resins, acrylic polyol based resins, acrylic based resins, ester based resins, amide based resins, butyral based resins, styrene based resins, urethane-acrylic copolymers, vinyl chloride-vinyl acetate copolymers, vinyl chloride-vinyl acetate-acrylic copolymers, chlorinated propylene based resins, cellulose nitrate based resins, and cellulose acetate based resins.

The design layer may include an additive such as an ultraviolet ray absorber, a photostabilizer, a curing agent, a plasticizer, and a catalyst, if necessary. The thickness of the design layer is, for example, 0.5 µm or more and 20 µm or less, may be 1 µm or more and 10 µm or less, and may be 2 µm or more and 5 µm or less.

Examples of the method for forming a design layer may include a method wherein an ink including a colorant, a binder resin, and a solvent is applied, and then, dried. Examples of the method for application may include a gravure printing method.

### 5. Substrate layer

The substrate layer in the present disclosure is a layer configured to support the design layer, resin layer, designability improving layer, and surface protective layer. Examples of the constituting material of the substrate layer may include resins, fibrous materials, metals, and non-metallic inorganic materials. The substrate layer may be a single layer, and may be a stacked body of two layers or more. In the latter case, the substrate layer may include two or more layers of the same type of constituent material, and may include two or more layers of different types of constituent material.

Examples of the resin used for the substrate layer may include synthetic resins, and natural resins. Examples of the synthetic resin may include thermoplastic resins. Examples of the thermoplastic resin may include olefin based resins such as polyethylene, polypropylene, polymethylpentene, ionomer, and olefin based thermoplastic elastomer; vinyl chloride based resins such as polyvinyl chloride, polyvinylidene chloride, and vinyl chloride-vinyl acetate copolymer; polyester based resins such as polyethylene terephthalate, polybutylene terephthalate, polyethylene naphthalate, ethylene glycol-terephthalic acid-isophthalic acid copolymer, and polyester based thermoplastic elastomer; acrylic based resins such as poly(meth)acrylic acid methyl, poly(meth)acrylic acid ethyl, poly(meth)acrylic acid butyl, and (meth)acrylic acid methyl-(meth)acrylic acid butyl copolymer; polyamide based resins such as nylon 6, and nylon 66; cellulose based resins such as triacetyl cellulose, cellophane, and celluloid; and styrene based resins such as polystyrene, acrylonitrile-styrene copolymer, and acrylonitrilebutadiene-styrene copolymer (ABD). Also, other examples of the thermoplastic resin may include polyvinyl alcohol, ethylene-vinyl acetate copolymer, ethylene-vinyl alcohol copolymer, polycarbonate based resins, polyarylate based resins, and polyimide based resins. Examples of the natural resin may include natural rubber, pine resin, and amber.

Examples of the fiber materials used for the substrate layer may include paper such as thin-leaf paper, kraft paper, fine paper, Japanese paper, titanium paper, printer paper, sulfuric acid paper, paraffin paper, parchment paper, glassine paper, wallpaper backing paper, paperboard and base paper for plasterboard. The paper may be ordinary paper, and may be flame-retardant paper. The flame-retardant paper is paper including flame retardant in ordinary paper. Examples of the flame retardant may include nitrogen compounds such as urea and ammonium compounds; hydroxides (preferably hydrates) such as magnesium hydroxide and aluminum hydroxide; and flame retardants including self-extinguishing phosphorus or halogen elements. In particular, compounds including crystalline water, such as magnesium hydroxide, can be made flame-retardant by the heat of vaporization of crystalline water during combustion decomposition.

Other examples of fibrous materials may include woven fabrics and non-woven fabrics. Examples of the fiber used for the woven fabrics or non-woven fabrics may include resin fibers (such as polyester based resin fiber, acrylic based resin fiber), natural fibers (such as silk, cotton, linen), glass fibers and carbon fibers. Also, when the fiber material is used for the substrate layer, resins such as acrylic based resins, styrene butadiene rubber, melamine based resins, and urethane based resins may be added (impregnated with resin after paper making, or filled with resin during paper making). Also, the substrate layer may be a wallpaper raw web wherein a resin layer such as a vinyl chloride based resin layer, an olefin based resin layer, or an acrylic based resin layer is stacked on the surface of the wallpaper backing paper.

Examples of the metal used for the substrate layer may include aluminum, aluminum alloys (such as duralumin), iron, iron alloys (such as carbon steel and stainless steel), copper, copper alloys (such as brass and bronze), gold, silver, chromium, nickel, cobalt, tin, and titanium. Also, the surface of the metal may be plating processed.

Examples of the non-metallic inorganic material used for the substrate layer may include non-ceramic based pottery materials such as cement, ALC (lightweight aerated concrete), gypsum, calcium silicate, and wood chip cement; ceramic based pottery materials such as ceramics, clay pottery, glass and enamel; and natural stones such as limestone (including marble), granite and andesite.

The substrate layer may include additives such as flame retardants, mineral agents, dry paper strengthening agent, wet paper strengthening agent, colorants, sizing agents, and fixing agents, as necessary. Also, in order to improve the close adhesiveness, for example, the surface of the substrate layer may be subjected to a surface treatment. Examples of the surface treatment may include an oxidation method and a roughening method. Examples of the oxidation method may include corona discharge treatment, chromium oxidation treatment, flame treatment, hot air treatment, and ozone and ultraviolet ray treatment method. Examples of the roughening method may include a sand blasting method and a solvent treatment method.

Examples of the shape of the substrate layer may include a sheet-shape. The thickness of the substrate layer is not particularly limited, and it is, for example, 10 µm or more and 300 µm or less. The basis weight of the substrate layer is not particularly limited, and is, for example, 50 g/m² or more and 300 g/m² or less, and may be 60 g/m² or more and 160 g/m² or less.

### 6. Decorative sheet

The decorative sheet in the present disclosure includes at least a substrate layer, a design layer, a resin layer, a designability improving layer, and a surface protective layer. The decorative sheet may include only the substrate layer, design layer, resin layer, designability improving layer, and surface protective layer, and may further include other layers. Examples of the other layer may include a primer layer, and an adhesive layer. Examples of the adhesive layer may include a first adhesive layer (interlayer adhesive layer) disposed between layers, and a second adhesive layer (rear surface adhesive layer) disposed on the surface of the substrate layer that is opposite side to the design layer.

Examples of the layer structure of the decorative sheet may include the following layer structures. In the following descriptions, the designability improving layer is a layer including the filled portion.
(1) Substrate layer/ design layer/ resin layer/ designability improving layer/ surface protective layer
(2) Substrate layer/ design layer/ resin layer/ designability improving layer/ primer layer/ surface protective layer
(3) Substrate layer/ design layer/ first adhesive layer/ resin layer/ designability improving layer/ surface protective layer
(4) Substrate layer/ first adhesive layer/ design layer/ resin layer/ designability improving layer/ surface protective layer
(5) Substrate layer/ design layer/ first adhesive layer/ resin layer/ designability improving layer/ primer layer/ surface protective layer
(6) Substrate layer/ first adhesive layer/ design layer/ resin layer/ designability improving layer/ primer layer/ surface protective layer
(7) Second adhesive layer/ substrate layer/ design layer/ resin layer/ designability improving layer/ surface protective layer
(8) Second adhesive layer/ substrate layer/ design layer/ resin layer/ designability improving layer/ primer layer/ surface protective layer
(9) Second adhesive layer/ substrate layer/ design layer/ first adhesive layer/ resin layer/ designability improving layer/ surface protective layer
(10) Second adhesive layer/ substrate layer/ first adhesive layer/ design layer/ resin layer/ designability improving layer/ surface protective layer
(11) Second adhesive layer/ substrate layer/ design layer/ first adhesive layer/ resin layer/ designability improving layer/ primer layer/ surface protective layer
(12) Second adhesive layer/ substrate layer/ first adhesive layer/ design layer/ resin layer/ designability improving layer/ primer layer/ surface protective layer

The "/" above shows the relative positional relationship of each layer, and for example, "A/B/C" means that A, B and C are disposed in this order along the thickness direction. Also, when described as, for example, "A/B", A and B may be disposed so as to be in direct contact, and may be disposed via another layer.

### (1) Primer layer

The decorative sheet may include a primer layer between the surface protective layer and the resin layer. By providing the primer layer, the close adhesiveness between the surface protective layer and the resin layer is improved, and, for example, the deterioration of the interlayer close adhesiveness, when exposed to ultraviolet rays, can be suppressed. Also, by providing the primer layer, the scuff resistance of the surface protective layer is improved.

The primer layer includes at least a resin component. Examples of the resin component may include those similar to the binder resin and a cured product of the binder resin exemplified for the filled portion.

The primer layer may further include at least one of an ultraviolet ray absorber and a photostabilizer. The ultraviolet ray absorber and the photostabilizer are similar to the contents described in "1. Designability improving layer" above. The thickness of the primer layer is, for example, 0.01 µm or more and 10 µm or less, may be 0.7 µm or more and 8 µm or less, and may be 1 µm or more and 6 µm or less. Also, examples of the method for forming a primer layer may include a method wherein a composition for a primer layer including a binder resin, and a solvent is applied, and then, dried. A curing treatment may be carried out, if necessary. As for the coating method, for example, gravure coating method is preferable, and particularly, gravure direct coating method is preferable.

### (2) Adhesive layer

The decorative sheet may include an adhesive layer. The position of the adhesive layer is not particularly limited. The adhesive layer may be disposed on the surface of the design layer that is opposite side to the substrate layer. Also, when the substrate layer is a stacked body including two layers or more, the adhesive layer may be disposed between each layer constituting the substrate layer. Such the adhesive layer, which is disposed between the layers of the decorative sheet, is referred to as a first adhesive layer.

The first adhesive layer includes resin. Examples of the resin may include ethylene-vinyl acetate copolymer (EVA), ethylene-methyl methacrylate copolymer (EMMA), ethylene-ethyl acrylate copolymer (EEA), ethylene-methyl acrylate copolymer (EMA), ethylene-(meth)acrylate copolymer (EMAA), acrylic based resins, styrene based resins, polyester based resins, urethane based resins, chlorinated polyolefin based resins, vinyl chloride-vinyl acetate copolymer based resins, polyvinyl butyral based resins, alkyd based resins, oil based resins, ketone based resins, epoxy based resins, melamine based resins, fluorine based resins, silicone based resin cellulose derivatives, and rubber based resins.

The thickness of the first adhesive layer is, for example, 0.1 µm or more and 10 µm or less. Also, examples of the method for forming a first adhesive layer may include a method wherein a resin composition including a resin, and a solvent is applied, and then, dried.

As shown in FIG. 2, the decorative sheet in the present disclosure may include an adhesive layer 7 on the surface of the substrate layer 1 that is opposite side to the design layer **2.** Such the adhesive layer, which is disposed on the rear surface of the decorative sheet, is referred to as a second adhesive layer. The second adhesive layer is provided as needed with the aim of increasing the close adhesiveness to the base member, which is an adherent. In this case, the decorative sheet may include a peelable separator layer on the surface of the second adhesive layer that is opposite side to the substrate layer.

Examples of the resin used for forming the second adhesive layer may include (meth)acrylic resins, (meth)acrylic modified polyolefins, chlorinated polyolefins, vinyl chloride resins, vinyl acetate resins, vinyl chloride-vinyl acetate copolymers, styrene-(meth)acrylic copolymers, polyesters, polyurethanes, and polyamides. A two-component curing type polyurethane based adhesives using isocyanate compounds as curing agents, or polyester based adhesives can also be applied. Examples of the adhesive may include (meth)acrylic based, urethane based, silicone based, and rubber based tackiness agents (pressure-sensitive adhesives).

In view of obtaining an excellent adhesiveness, the thickness of the second adhesive layer is, for example, 1 µm or more and 100 µm or less, may be 5 µm or more and 50 µm or less, and may be 10 µm or more and 30 µm or less.

### (3) Decorative sheet

The use application of the decorative sheet in the present disclosure is not particularly limited, and examples may include construction materials. The decorative sheet may be used for an exterior member (a member used for exterior applications), and may be used for an interior member (a member used for interior applications), and it is preferably used for an exterior member. The decorative sheet in the present disclosure has good weather resistance, since the surface protective layer and the designability improving layer (particularly, the filled portion) respectively include an ultraviolet ray absorber. Examples of the exterior member may include construction materials. For example, the construction materials are used in buildings such as houses, offices, shops, hospitals, and clinics. Examples of the use application of the exterior member may include exterior walls, roofs, eave soffits, door pockets, window frames, doors, door frames, handrails, fences, and drying stands.

### 7. Method for producing decorative sheet

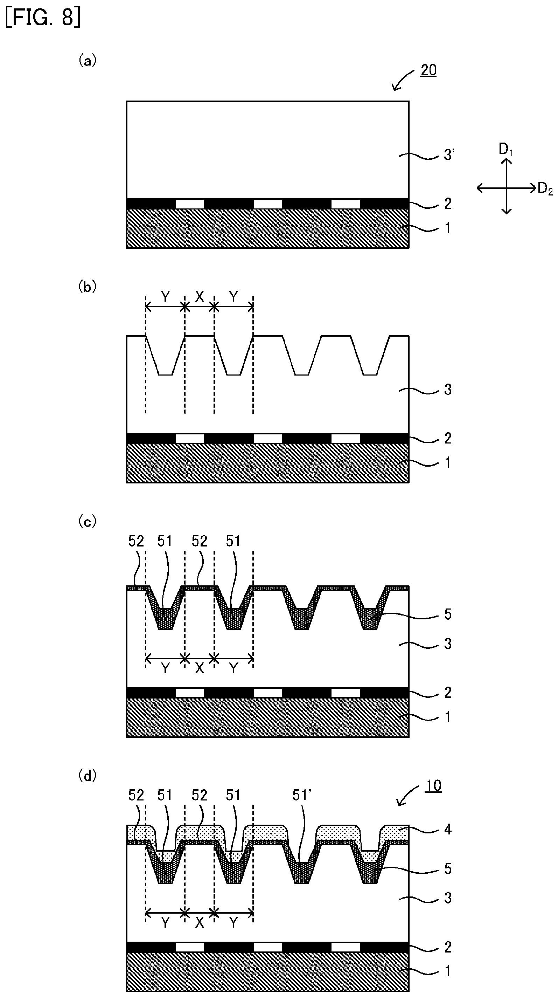

FIGS. 8 are schematic cross-sectional views exemplifying a method for producing a decorative sheet in the present disclosure. In FIGS. 8, a stacked body 20 including a substrate layer 1, a design layer 2, and a film for a resin layer 3' in this order, in the thickness direction D₁, is firstly prepared (FIG. 8(a), a stacked body preparing step). The method for forming the design layer 2 and the film for a resin layer 3' is as described above. The film for a resin layer 3' may be adhered to the design layer 2 via an adhesive layer (not shown in the figure). Then, a resin layer 3 including a convex portion X and a concave portion Y is formed on the surface of the film for a resin layer 3' that is opposite to the design layer 2 by carrying out an embossing process (FIG. 8(b), resin layer forming step). The embossing process is as described above. Then, by coating the surface of the resin layer 3 with a composition for a designability improving layer, and wiping, the composition is filled into the concave portion Y. By drying and curing as necessary, a designability improving layer 5 including a filled portion 51 and a non-filled portion 52, is formed (FIG. 8(c), designability improving layer forming step). This wiping is preferably carried out with a doctor blade or a roll. Then, a surface protective layer 4 is formed on the surface of the resin layer 3 that is opposite side to the design layer 2 (FIG. 8(d), surface protective layer forming step). The method for forming the surface protective layer is as described above. Prior to the surface protective layer forming step, a primer layer forming step may be carried out. Thereby, a decorative sheet 10 is obtained.

### B. Decorative member

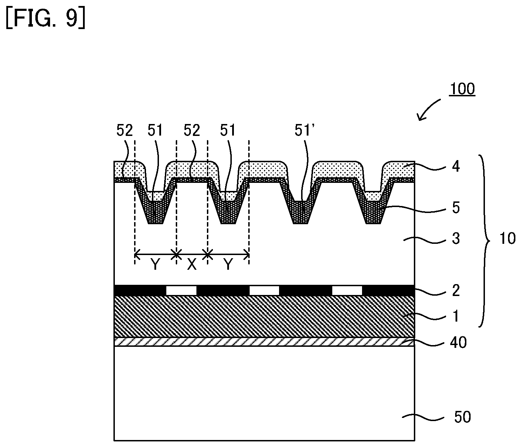

FIG. 9 is a schematic cross-sectional view exemplifying the decorative member in the present disclosure. The decorative member 100 shown in FIG. 9 includes a base member 50, an adhesive layer 40, and the decorative sheet 10 described above, in this order. As shown in FIG. 9, the surface protective layer 4 of the decorative sheet 10 constitutes the outermost layer of the decorative member 100. The decorative sheet 10 is disposed so that the substrate layer 1 side surface faces the base member 50 side.

According to the present disclosure, since the decorative sheet described above is included, a decorative member with good weather resistance may be obtained.

### 1. Decorative sheet

Since the decorative sheet in the present disclosure is similar to the content described in "A. Decorative sheet" above, the description herein is omitted.

### 2. Base member

The base member in the present disclosure is a member decorated by the decorative sheet. Examples of the base member may include a resin member. Examples of the resin used for the resin member may include vinyl chloride based resins, acrylic based resins, ester based resins, styrene based resins, olefin based resins, acrylonitrile-butadienestyrene copolymers (ABS based resins), phenolic based resins, cellulose based resins and rubber, and among them, vinyl chloride based resin is preferable. For details of each resin, the contents described in "A. Decorative sheet" above may be cited as appropriate. Also, other examples of the base member may include a woody member. Examples of the woody member may include wood single panel, plywood panel, particle board, and woody fiberboard. Examples of the wood used for the woody member may include cedar, hinoki cypress, pine, and lauan.

Also, other examples of the base member may include a metal member. Examples of the metal used for the metal member may include iron, iron alloys (such as carbon steel, stainless steel), and aluminum. Also, other examples of the base member may include a ceramic member. The material of the ceramic member may be ceramics such as glass and pottery, may be non-cement ceramic based materials such as gypsum, and may be non-pottery ceramics such as ALC (lightweight aerated concrete).

The shape of the base member is not particularly limited, and examples may include a plate shape, a sheet shape, and a steric shape. Also, the base member may include a flat surface portion, may include a curved surface portion, and may include both the flat surface portion and the curved surface portion. Also, the base member may include at least one of a convex portion, a concave portion, a convexity portion, a concavity portion, and a through portion.

### 3. Adhesive layer

The decorative member in the present disclosure may include an adhesive layer (third adhesive layer) between the base member and the decorative sheet. As the third adhesive layer disposed between the base member and the decorative sheet, for example, resins similar to the second adhesive layer described above, are used. Also, when the decorative sheet includes the second adhesive layer described above, the decorative sheet and the base member may be in direct contact with each other.

### 4. Decorative member

The decorative member in the present disclosure includes the decorative sheet and the base member described above. The decorative member in the present disclosure may be an interior member, and may be an exterior member, and it is preferably an exterior member. Since the use application of the decorative member is similar to the content described in "A. Decorative sheet" above, the descriptions herein are omitted.

The decorative member in the present disclosure may be obtained by, for example, stacking the decorative sheet and the base member. Specifically, the surface of the base member (the surface needed to be decorated) and the substrate layer side surface of the decorative sheet are stacked so as to face each other.

Examples of the method for producing a decorative member may include a method wherein the decorative sheet in the present disclosure is adhered to the base member so that the second adhesive layer in the decorative sheet and the surface of the base member are in direct contact. Also, other examples of the method for producing a decorative member may include a method wherein the decorative sheet in the present disclosure is stacked on the base member via the third adhesive layer so that the substrate layer side surface of the decorative sheet and the surface of the base member face each other.

Examples of the method for stacking the base member and the decorative sheet may include lamination method, wrapping method, and vacuum forming method. In the lamination method, for example, the decorative sheet is pressurized onto a plate-like base member with a pressuring roller. In the wrapping method, for example, while feeding the decorative sheet, the decorative sheet is sequentially pressurized and adhered to the multiple side surfaced constituting the base member, using multiple rollers with different orientations. When a hot melt adhesive (heat-sensitive adhesive) is used to stack the decorative sheet and the base member, the heating temperature at that time is, for example, 150°C or more and 200°C or less. Also, when a reactive hot melt adhesive is used, the heating temperature is, for example, 100°C or more and 130°C or less.

The present disclosure is not limited to the embodiments. The embodiments are exemplification, and any other variations are intended to be included in the technical scope of the present disclosure if they have substantially the same constitution as the technical idea described in the claim of the present disclosure and offer similar operation and effect thereto.

### Examples

### [Example 1]

On a white polypropylene film (substrate layer) with a thickness of 60 µm, a pattern layer including a vessel channel pattern by black based ink, and a pattern layer including a wood surface pattern, other than the vessel portion, by brownish-red based ink were formed by gravure multicolor printing, and a design layer including a wood grain pattern with a total thickness of 1 µm was formed. Then, an adhesive layer (polyester resin, thickness: 5 µm) was formed on the design layer. Then, transparent polypropylene resin film (film for resin layer, thickness: 80 µm) was stacked on the adhesive layer using an extrusion lamination method. Thereby, a stacked body including a substrate layer, a design layer, an adhesive layer, and a film for a resin layer in this order was obtained.

Then, the film for a resin layer was heated to soften, and an embossing plate with a wood grain pattern was used to carry out an embossing process from the film for a resin layer side of the stacked body, a convexoconcave shape (convex portion and concave portion) with wood grain pattern was formed on the film for a resin layer side surface to obtain a resin layer.

Then, the following blackish brown ink for a filled portion (ink for a designability improving layer) was supplied to the surface of the resin layer (surface with the convexoconcave shape), then, a doctor blade was pressed perpendicular to the substrate layer, scraped the ink for a filled portion, pressed the ink into the concave portion of the resin layer, and excess ink was removed. Then, the ink was dried and cured.

### <Ink for filled portion>

- Copolymer resin of acrylic and urethane: 100 parts by mass
- Matting agent (silica): 7 parts by mass
- Hydroxyphenyltriazine based ultraviolet ray absorber: 15 parts by mass (product name: Tinuvin460 from BASF)
- Hindered amine photostabilizer: 2 parts by mass (product name: Tinuvin123, from BASF)
- Coloring pigments (carbon black, quinacridone, isoindrinone)
- Dilution solvent

Then, after subjecting the resin layer side surface to a corona discharge treatment, the following composition for a primer layer was applied and dried to form a primer layer with a thickness of 4 µm.

### <Composition for primer layer>

- Thermosetting resin composition 100 parts by mass (polycarbonate based urethane acrylic copolymers and acrylic polyols)
- Hexamethylene diisocyanate 5 parts by mass
- Dilution solvent

Then, a surface protective layer with a thickness of 5 µm was formed by applying the following composition for a surface protective layer on the primer layer, and crosslinking curing the composition for a surface protective layer by irradiation with electron beams.

### <Composition for surface protective layer>

- Ionizing radiation curable resin composition: 100 parts by mass (trifunctional urethane acrylate oligomer with weight average molecular weight of 4000)
- Matting agent (silica): 15 parts by mass
- Hydroxyphenyltriazine based ultraviolet ray absorber: 2 parts by mass (product name: Tinuvin460 from BASF)
- Hindered amine photostabilizer: 2 parts by mass (product name: Tinuvin123, from BASF)

By the above operation, a decorative sheet was obtained. A cross-sectional observation of the obtained decorative sheet was carried out. As a result, N₂/(N₁ + N₂) was 8%.

### [Example 2]

A decorative sheet was obtained in the same manner as in Example 1 except that the ratio of the ultraviolet ray absorber in the ink for a filled portion was changed to 10 parts by mass with respect to 100 parts by mass of the resin.

### [Example 3]

A decorative sheet was obtained in the same manner as in Example 1 except that the ratio of the ultraviolet ray absorber in the ink for a filled portion was changed to 0.1 parts by mass with respect to 100 parts by mass of the resin.

### [Comparative Example]

A decorative sheet was obtained in the same manner as in Example 1 except that the ratio of the ultraviolet ray absorber in the ink for a filled portion was changed to 0 parts by mass with respect to 100 parts by mass of the resin.

### [Evaluation]

The weather resistance of the decorative sheet obtained in each Example and each Comparative Example was evaluated. Specifically, an accelerated weathering test using a metal halide lamp (MWOM) was carried out to the decorative sheet for 1000 hours (a test repeating a cycle of: irradiating with ultraviolet rays for 20 hours under the following irradiation conditions, and then, a dew condensation was carried out for 4 hours under the following dew condensation conditions).

### (Testing device)

Product name "Daipla MetalWeather" from Daipla Wintes Co., Ltd.

### (Irradiation conditions)

Illuminance: 65 mW/cm², Black panel temperature: 63°C, Bath humidity: 50%RH, Time: 20 hours

### (Dew condensation conditions)

Illuminance: 0 mW/cm², Bath humidity: 98%RH, Time: 4 hours

After the accelerated weathering test, the appearance of the decorative sheet was visually checked and evaluated according to the following criteria.
A: No appearance change was observed across the entire decorative sheet.
B: Slight bleaching or slight cracking occurred in the transparent resin layer, but at a level not being a practical problem.
C: Significant appearance bleaching and a large crack occurred in the transparent resin layer.

The result for Example 1 was A, for Example 2 was A, for Example 3 was B, and for Comparative Example was C.

As described above, in the present disclosure, for example, the following inventions are provided.

[1] A decorative sheet comprising:
   a substrate layer;
   a design layer disposed on one surface of the substrate layer;
   a resin layer disposed on a surface of the design layer that is opposite side to the substrate layer; and
   a surface protective layer disposed on a surface of the resin layer that is opposite side to the design layer, wherein
   the resin layer has a convexoconcave shape including a convex portion and a concave portion, on a surface protective layer side surface;
   the decorative sheet includes a designability improving layer, on the surface protective layer side surface of the resin layer, including at least one of a colorant and a matting agent;
   the designability improving layer includes a filled portion disposed in the concave portion;
   as the filled portion, the decorative sheet includes a filled portion where at least a part thereof is not covered by the surface protective layer; and
   the surface protective layer and the designability improving layer respectively include an ultraviolet ray absorber.
[2] The decorative sheet according to [1], wherein the decorative sheet is used for an exterior member.
[3] The decorative sheet according to [1] or [2], wherein the designability improving layer includes a triazine based ultraviolet ray absorber as the ultraviolet ray absorber.
[4] The decorative sheet according to any one of [1] to [3], wherein the surface protective layer includes a triazine based ultraviolet ray absorber as the ultraviolet ray absorber.
[5] The decorative sheet according to any one of [1] to [4], wherein a ratio of the ultraviolet ray absorber included in the designability improving layer is more than a ratio of the ultraviolet ray absorber included in the surface protective layer.
[6] The decorative sheet according to any one of [1] to [5], wherein the designability improving layer includes a binder resin; and
   a content of the ultraviolet ray absorber in the designability improving layer is 0.1 parts by mass or more and 30 parts by mass or less, with respect to 100 parts by mass of the binder resin.
[7] The decorative sheet according to any one of [1] to [6], wherein the surface protective layer includes a binder resin; and
   a content of the ultraviolet ray absorber in the surface protective layer is 0.05 parts by mass or more and 10 parts by mass or less, with respect to 100 parts by mass of the binder resin.
[8] The decorative sheet according to any one of [1] to [7], wherein at least one of the surface protective layer and the designability improving layer includes a photostabilizer.
[9] The decorative sheet according to any one of [1] to [8], wherein the designability improving layer includes a non-filled portion between the convex portion and the surface protective layer; and
   the filled portion and the non-filled portion are arranged in a continuous manner.
[10] The decorative sheet according to any one of [1] to [9], wherein the decorative sheet includes a first adhesive layer between the design layer and the resin layer.
[11] The decorative sheet according to any one of [1] to [10], wherein the decorative sheet includes a second adhesive layer on a surface of the substrate layer that is opposite side to the design layer.
[12] A decorative member comprising a base member, and the decorative sheet according to any one of [1] to [11].

### Reference Signs List

1: substrate layer
2: design layer
3: resin layer
4: surface protective layer
5: designability improving layer
51: filled portion
10: decorative sheet
50: base member
100 decorative member

## Claims

1. A decorative sheet comprising:
a substrate layer;
a design layer disposed on one surface of the substrate layer;
a resin layer disposed on a surface of the design layer that is opposite side to the substrate layer; and
a surface protective layer disposed on a surface of the resin layer that is opposite side to the design layer, wherein
the resin layer has a convexoconcave shape including a convex portion and a concave portion, on a surface protective layer side surface;
the decorative sheet includes a designability improving layer, on the surface protective layer side surface of the resin layer, including at least one of a colorant and a matting agent;
the designability improving layer includes a filled portion disposed in the concave portion;
as the filled portion, the decorative sheet includes a filled portion where at least a part thereof is not covered by the surface protective layer; and
the surface protective layer and the designability improving layer respectively include an ultraviolet ray absorber.

2. The decorative sheet according to claim 1, wherein the decorative sheet is used for an exterior member.

3. The decorative sheet according to claim 1, wherein the designability improving layer includes a triazine based ultraviolet ray absorber as the ultraviolet ray absorber.

4. The decorative sheet according to claim 1, wherein the surface protective layer includes a triazine based ultraviolet ray absorber as the ultraviolet ray absorber.

5. The decorative sheet according to claim 1, wherein a ratio of the ultraviolet ray absorber included in the designability improving layer is more than a ratio of the ultraviolet ray absorber included in the surface protective layer.

6. The decorative sheet according to claim 1, wherein the designability improving layer includes a binder resin; and
a content of the ultraviolet ray absorber in the designability improving layer is 0.1 parts by mass or more and 30 parts by mass or less, with respect to 100 parts by mass of the binder resin.

7. The decorative sheet according to claim 1, wherein the surface protective layer includes a binder resin; and
a content of the ultraviolet ray absorber in the surface protective layer is 0.05 parts by mass or more and 10 parts by mass or less, with respect to 100 parts by mass of the binder resin.

8. The decorative sheet according to claim 1, wherein at least one of the surface protective layer and the designability improving layer includes a photostabilizer.

9. The decorative sheet according to claim 1, wherein the designability improving layer includes a non-filled portion between the convex portion and the surface protective layer; and
the filled portion and the non-filled portion are arranged in a continuous manner.

10. The decorative sheet according to claim 1, wherein the decorative sheet includes a first adhesive layer between the design layer and the resin layer.

11. The decorative sheet according to claim 1, wherein the decorative sheet includes a second adhesive layer on a surface of the substrate layer that is opposite side to the design layer.

12. A decorative member comprising a base member, and the decorative sheet according to any one of claims 1 to 11.
